# EUROPEAN PATENT SPECIFICATION

(11) **EP 4 010 833 B1**
(45) Date of publication and mention of the grant of the patent: **17.07.2024**
(21) Application number: 20842764.1
(22) Date of filing: 17.12.2020
(51) Int. Cl.: G06F 21/62, H04W 12/60

(54) **MACHINE LEARNING BASED PRIVACY PROCESSING**
AUF MASCHINELLEM LERNEN BASIERTE DATENSCHUTZVERARBEITUNG
TRAITEMENT DE CONFIDENTIALITÉ BASÉ SUR UN APPRENTISSAGE AUTOMATIQUE

(30) Priority: 18.12.2019 US 201962949735 P
(43) Date of publication of application: 15.06.2022
(73) Proprietor: Google LLC, Mountain View, CA 94043 (US)
(72) Inventor: MADAR, Lawrence J., III, Mountain View, California 94043 (US); KOYUNCU, Osman, San Diego, California 92131 (US)
(74) Representative: Marks & Clerk GST
(86) International application number: PCT/US2020/065606
(87) International publication number: WO 2021/127174

(56) References cited:
- WO-A1-2019/104228
- US-A1- 2017 041 454
- US-B1- 9 104 886
- US-B1- 9 286 482

## Description

### CROSSS-REFERENCE TO RELATED APPLICATION

This application claims the benefit of U.S. Provisional Application No. 62/949,735, filed December 18, 2019, and titled "PRIVACY PROCESSOR,".

### BACKGROUND

This specification relates to ambient computing.

Mobile computing devices, e.g., smart phones, personal digital assistants, electronic tablets, laptops, and the like, typically use power provided by one or more rechargeable batteries. A rechargeable battery provides only a finite amount of power to a device before the battery must be recharged, e.g., by applying an electric current to the battery. Recharging the battery of a mobile computing device generally requires connecting the mobile computing device to an electric grid, which reduces or eliminates its mobility. Consequently, reducing power consumption of mobile computing devices, thereby extending their battery life, is an important objective.

Mobile computing devices can include one or more or peripheral sensors. For example, some mobile computing devices include microphones, cameras, accelerometers, and the like. Mobile computing devices can also include one or more processing components to process data collected by the one or more peripheral sensors. For example, some mobile computing devices include central processing units (CPUs), digital signal processors (DSPs), or other processing components.

Mobile computing devices can perform actions based on data collected by their one or more peripheral sensors and processed by their one or more processing components. For example, some mobile computing devices can perform actions in response to voice commands detected by a microphone and processed by a CPU. However, maintaining processing components in an active state so that they can process sensor data consumes significant power. Patent documents WO 2019/104228 A1, US 2017/041454 A1, US 9 286 482 B1, and US 9 104 886 B1 are relevant prior art.

### SUMMARY

This specification describes technologies for enhancing privacy using ambient computing . The ambient computing system described in this specification operates in one of several different states at any given time, each state being defined by a combination of components that are powered on. The combination of components that are powered on can be determined in part by a machine learning engine that implements a trained model that takes sensor data as inputs and generates an output that can be used to determine which combination of components of the ambient computing device should have an adjusted power state. Adjusting the power state of a component may include disabling the component or activating the component.

The sensor data that is input to the machine learning engine may include, for example, audio data, touch data, fingerprint data, radar data, image data, acceleration data, and location data.

The output of the machine learning engine can indicate one or more particular conditions. These conditions may include or otherwise involve, for example, recognized type of interaction, recognized objects, recognized people, recognized faces, recognized voices, recognized sounds, geographic locations, etc. Based on the one or more identified conditions, the system may adjust the power state of one or more components of the computing device. These components may include, for example, one or more microphones, cameras, vision sensors, global positioning system (GPS) sensors, etc. These components may additionally or alternatively include processing components or portions of a processing component such as a module. Based on the one or more identified conditions, the system can choose to retain or delete the collected sensor data corresponding to the one or more identified conditions.

In some implementations, the ambient computing system may use other types of data in addition to or in place of the sensor data. For example, the ambient computing system may use message data and/or phone numbers in determining one or more particular conditions.

In one general aspect, a system, such as an ambient computing system, includes: one or more sensors configured to generate sensor signals; and a plurality of processing components including a machine learning engine, and one or more other processing components, where the ambient computing system is configured to perform operations includes: remaining in a monitoring power state until the controller receives an interrupt indicating presence of one or more sensor signals, providing the one or more sensor signals as input to the machine learning engine, where the machine learning engine implements a predictive model trained on user-specific data that is specific to a particular user, performing, by the machine learning engine, an inference pass over the predictive model to generate an output representing a particular context that is specific to the particular user, determining, based on the particular context for the particular user, that that one or more components of the ambient computing system should be disabled, and in response, disabling the one or more components of the ambient computing system.

Implementations may include one or more of the following features. For example, in some implementations, disabling the one or more components of the ambient computing system includes disabling one or more of the sensors.

In some implementations, disabling one or more of the sensors includes cutting power to the one or more sensors.

In some implementations, disabling one or more of the sensors includes disabling a microphone, a camera, a vision sensor, a radar sensor, or a location sensor.

In some implementations, disabling one or more components of the ambient computing system includes disabling a transcription module that automatically transcribes human speech.

In some implementations, disabling one or more components of the ambient computing system includes disabling an I/O channel between the sensors and other components of the ambient computing system.

In some implementations, determining, based on the particular context for the particular user, that that one or more of the sensors should be disabled includes determining that audio signals received by one or more microphones include speech uttered by a particular person previously identified by the user.

In some implementations, the ambient computing system is configured to block the transmission of data during the inference pass from being written to main memory, a main CPU cluster, or a main machine learning engine.

In some implementations, the ambient computing system is configured to perform a training process to update the predictive model with user-specific data, where performing the training process includes performing operations includes: receiving user input indicating that a current environmental context is a context in which one or more components of the ambient computing system should be disabled; generating training data from recorded inputs of the one or more sensors; and updating the predictive model using the training data generated from the recorded inputs of the one or more sensors.

In some implementations, receiving the user input includes receiving user input identifying a particular user who uttered speech during a recent time period.

In some implementations, the current environmental context includes data including a representation of a current location of the user.

Other embodiments of these aspects include corresponding methods, apparatus, and computer programs encoded on computer storage devices, configured to perform the actions of the methods.

In another general aspect, there is provided a computer implemented method comprising, remaining in a monitoring power state until a controller receives an interrupt indicating presence of one or more sensor signals, providing the one or more sensor signals as input to a machine learning engine, wherein the machine learning engine implements a predictive model trained on user-specific data that is specific to a particular user, performing, by the machine learning engine, an inference pass over the predictive model to generate an output representing a particular context that is specific to the particular user, determining, based on the particular context for the particular user, that one or more components of an ambient computing system should be disabled, and in response, disabling the one or more components of the ambient computing system.

Disabling the one or more components of the ambient computing system may comprise disabling one or more of the sensors. Disabling one or more of the sensors may comprise cutting power to the one or more sensors. Disabling one or more of the sensors may comprise disabling a microphone, a camera, a vision sensor, a radar sensor, or a location sensor. Disabling one or more components of the ambient computing system may comprise disabling a transcription module that automatically transcribes human speech. Disabling one or more components of the ambient computing system may comprises disabling an I/O channel between the sensors and other components of the ambient computing system.

Determining, based on the particular context for the particular user, that that one or more of the sensors should be disabled may comprise determining that audio signals received by one or more microphones include speech uttered by a particular person previously identified by the user.

The method may further comprise blocking transmission of data during the inference pass from being written to a main memory, a main CPU cluster, or a main machine learning engine.

In another general aspect, there is provided one or more non-transitory computer-readable media storing instructions that, when executed by one or more computers, cause the one or more computers to perform operations comprising remaining in a monitoring power state until a controller receives an interrupt indicating presence of one or more sensor signals, providing the one or more sensor signals as input to a machine learning engine, wherein the machine learning engine implements a predictive model trained on user-specific data that is specific to a particular user, performing, by the machine learning engine, an inference pass over the predictive model to generate an output representing a particular context that is specific to the particular user, determining, based on the particular context for the particular user, that one or more components of an ambient computing system should be disabled, and in response, disabling the one or more components of the ambient computing system.

Optional features of one aspect may be combined with any other aspect where feasible.

The subject matter described in this specification can be implemented in particular embodiments so as to realize one or more of the following advantages. An ambient computing system can perform a variety of complex tasks while consuming less power than previous approaches. The power savings and increase in battery life is further improved by using a machine learning engine. The machine learning engine can generate outputs that represent customized combinations of components, which eliminates the need to either wake up all components or no components of the chip. This approach also greatly increases the number of possible power states without overly complicating the hardware control logic. These approaches also allow a system to perform sophisticated tasks that require continual monitoring of the environment without waking up a main CPU cluster of a device. This allows the ambient computing system to be more responsive to changes in its environment while also reducing power consumption. Accordingly, an ambient computing system can provide greater functionality with limited impact on the battery life of a computing device, and increase the total battery life of a computing device with complex ambient state.

Other advantages include leveraging one or more machine learning models on the ambient computing system to determine an environment condition or context. This environment condition or context may be determined to be associated with a private or sensitive matter. Based on this determination, the ambient computing system may disable one or more components of the device to improve privacy. Moreover, the ambient computing system may prevent data from being transmitted to components of the device outside of the ambient computing system while the determination is being made and/or if the environment condition or context is determined to be associated with a private or sensitive matter, thereby further improving data privacy.

The details of one or more embodiments of the subject matter of this specification are set forth in the accompanying drawings and the description below. Other features, aspects, and advantages of the subject matter will become apparent from the description, the drawings, and the claims

The invention is defined by the independent claims.

### BRIEF DESCRIPTION OF THE DRAWINGS

FIG. 1 is a diagram of an example ambient computing system.
FIG. 2 is a diagram of an example ambient computing system changing the power state of components based on determined conditions.
FIG. 3 is a flowchart of an example process for disabling one or more components of an ambient computing system.
FIG. 4 is a flowchart of an example process for training a machine learning model locally on a device.

Like reference numbers and designations in the various drawings indicate like components.

### DETAILED DESCRIPTION

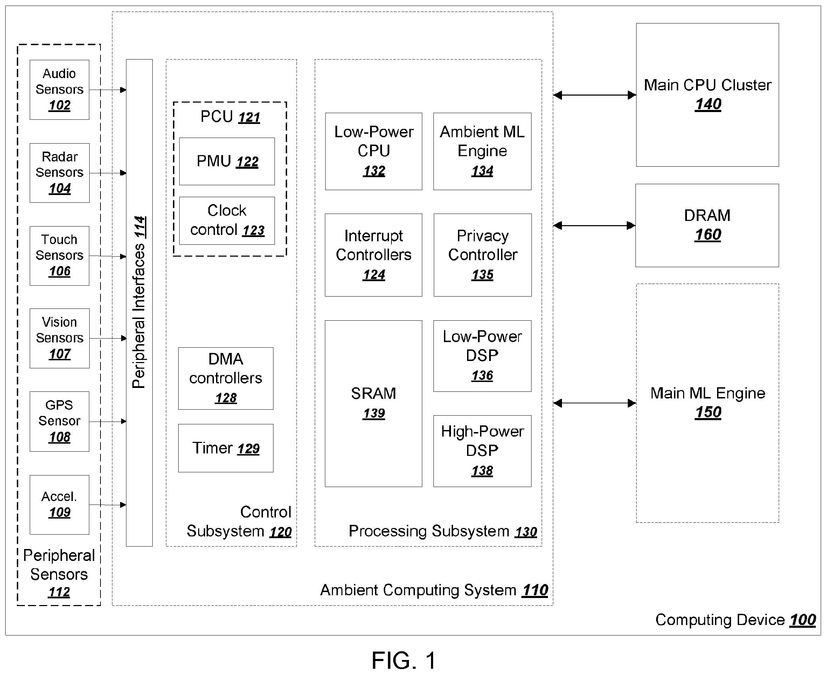

FIG. 1 is a diagram of an example ambient computing system 100. The device 100 can include a system implemented in any appropriate computing device, e.g., a smart phone, a smart watch, a fitness tracker, a personal digital assistant, an electronic tablet, a laptop, to name just a few examples. The system of computing device 100 can be used so that the computing device 100 can disable or enable different components of the computing device based on monitored environmental conditions or contexts. The computing device 100 can continually monitor and respond to inputs from the environment. The computing device 100 may process inputs locally on the device 100 itself to determine one or more environment conditions or contexts. By processing inputs locally and disabling components when particular environmental conditions or contexts are detected, the computing device 100 can enhance the privacy of the device user and of the privacy of others that are communicating with the device user or are in close proximity of the device user. Disabling or deactivating components may involve the computing device 100 cutting all or a portion of power to respective components. Enabling or activing components may involve the computing device 100 supplying power to the respective components or increasing the supply of power to the respective components. Accordingly, the system may or may not have been supplying power to a component or other circuitry that is being enabled or activated. In other words, a component being awoken or activated may or may not have been completely powered down previously. Alternatively or in addition, waking, enabling, or activating a component can include resuming from a previously suspended state.

The one or more components of the computing device 100 can be implemented on a system on a chip (SoC) within the computing device. The computing device 100 can be implemented as one or more integrated circuits. For example, the computing device 100 can be implemented as an integrated privacy processor. The one or more integrated circuits can include each component of the system on a single silicon substrate or on multiple interconnected dies, e.g., using silicon interposers, stacked dies, or interconnect bridges. Other components of the computing device, including a main CPU cluster 140, can be implemented on the same or on a separate die. The computing device 100 may include components, including the peripheral sensors 112, one or more displays, a battery, and other components, that are separate from and independent of the SoC, and may for example be mounted on a common housing.

Briefly, and as described in further detail below, the device 100 includes a number of peripheral sensors 112 configured to generate sensor signals based on input from the environment of the computing device. The device 100 includes a control subsystem 120 for controlling the supply of power and sensor signals to components in the system. And the device 100 includes a processing subsystem 130 for processing sensor signals and generating outputs.

The device 100 also includes a main CPU cluster 140. The main CPU cluster 140 is a component of the computing device that includes one or more general-purpose processors that are separate from the devices in the processing subsystem 130. The processors of the main CPU cluster 140 generally have more computing power than any of the devices in the processing subsystem 130, and therefore, the processors of the main CPU cluster 140 may also consume more power than any of the devices in the processing subsystem 130.

The device 100 can also optionally include a main machine learning (ML) engine 150. The main ML engine 150 is a special-purpose processing device that is configured to perform inference passes through one or more machine learning models. Each inference pass uses inputs and learned parameter values of a machine learning model to generate one or more outputs predicted by the learned model. The main ML engine 150 can include one or more compute tiles. In general, a compute tile is a self-contained computational component configured to execute a set of computations independently. The tiles of the main ML engine 150 can be arranged in a network and programmed so that each tile of the main ML engine 150 is configured to perform operations of one portion of an inference pass through the machine learning model. For example, if the machine learning model is a neural network, each tile in the main ML engine 150 can be configured to compute the computations of one layer of the neural network. A suitable machine learning engine having multiple compute tiles is described in U.S. Pat. No. 9,710,265, which is incorporated herein by reference. The main ML engine 150 also provides higher performance computing power than any of the devices in the processing subsystem 130 of the ambient computing system 110. Therefore, the main ML engine 150 also consumes more power than any of the devices in the processing subsystem 130.

The device 100 also includes a dynamic random-access memory (DRAM) 160. The DRAM 160 may serve as the main or primary memory of the computing device 100 by, for example, serving as RAM for the main CPU cluster 140 and/or the main ML engine 150. The DRAM 160 requires an external memory refresh circuit which periodically rewrites the data it stores. The DRAM 160 may contain a number of memory cells, each representing a bit of data, each consisting of a capacitor and a transistor. When the DRAM 160 is refreshed, the charge in each of the capacitors may be restored to their original charge.

The processing subsystem 130 includes an ambient machine learning engine 134. The ambient ML engine 134 is also a special-purpose processing device that is configured to perform inference passes through one or more machine learning models. When the device 100 includes both a main ML engine 150 and an ambient ML engine 134, the ambient ML engine 134 has fewer compute tiles and therefore has less processing power than the main ML engine 150 and consumes less power than the main ML engine 150. For example, the ambient ML engine 134 can be implemented as one or two tiles, whereas the main ML engine 150 can have 8-16 or more interconnected tiles.

The processing subsystem 130 also includes a privacy controller 135. The privacy controller 135 could be a DSP, a CPU, or another kind of processor or ASIC. The privacy controller 135 may receive the output of the ambient ML engine 134. Based on the output received from the ambient ML engine 134, the privacy controller 135 may cut or reduce power to one or more sensors of the peripheral sensors 112 of the device 100. In some cases, based on the output received from the ambient ML engine 134, the privacy controller 135 may supply or increase the supply of power to one or more sensors of the peripheral sensors 112 of the device 100. The privacy controller 135 may also prevent some data, such as input from one or more of the peripheral sensors 112, from being stored in the DRAM 160. The privacy controller 135 may determine which data is permitted to be stored in the DRAM 160 based on the received output of the ambient ML engine 134 and/or the main ML engine 150.

Although not depicted, the computing device 100 can also include one or more other components commonly found on such computing devices, e.g., a display, a modem, a graphics processing unit, a display processor, or a special-purpose image processor, to name just a few examples. These components can be powered down during the low-power states described below and activated if the system determines that the sensor signals match an application requiring their activation.

The device 100 includes a number of peripheral sensors 112. The peripheral sensors 112 include one or more audio sensors 102, one or more radar sensors 104, one or more touch sensors 106, one or more vision sensors 107, a Global Positioning System (GPS) sensor 108, and an accelerometer 109. The system can include additional, fewer, or alternative peripheral sensors. For example, the system can include a Wi-Fi signal detector, a cellular signal detector, a barometer, a thermometer, a magnetometer, or other types of peripheral sensors.

The peripheral sensors 112 can be devices configured to generate sensor signals in response to environmental inputs. The one or more audio sensors 102, e.g., microphones, can generate audio signals based on sounds in the environment. For example, the one or more audio sensors 102 can generate audio signals corresponding to human speech. The one or more radar sensors 104 can detect radar signals based on reflected radio waves emitted by a transmitter of the computing device. Variations in reflected radio waves can indicate movement in the environment. For example, the radar sensors 104 can generate radar signals that are received due to being reflected off of the user, e.g., when the user is making gestures in proximity to the computing device. Similarly, the one or more touch sensors 106 can generate signals due to touch gestures made by a user of the computing device on a presence-sensitive or pressure-sensitive interface of the device. The one or more vision sensors 107, e.g., visible-light cameras, infrared light (IR) cameras, etc., can generate signals due to captured images. For example, the one or more vision sensors 107 can generate signals corresponding to images of people or people's faces. The GPS sensor 108 can generate signals in response to received location data communications. And the accelerometer 109 can generate signals due to accelerations experienced by the computing device. In this specification, whenever sensor signals are described as being inputs to other processing components, the inputs can be analog electrical signals generated by the sensors themselves, digital representations of the sensor signals, or processed digital representations of the sensor signals that represent one or more properties of the original signals. The peripheral sensors 112 of the computing device 100 can also include an inertial measurement sensor, a barometer, a specific absorption rate proximity sensors, and WiFi network name sensors, to name just a few other examples.

The ambient computing system 110 includes one or more peripheral interfaces 114. The peripheral interfaces 114 can be a component of the computing device 100 that is powered on even when the device is in its lowest power state. The peripheral interfaces 114 can include any appropriate peripheral interface for converting inputs received from the peripheral sensors 112 into sensor signals to be used by the ambient computing system 110. For example, the peripheral interfaces 114 can include a pulse density modulation (PDM) interface, an inter-IC sound (I2S) interface, an inter-integrated circuit (I2C) interface, an I3C interface, a time division multiplexed (TDM) interface, and a serial peripheral interface (SPI), to name just a few examples.

Each of the peripheral interfaces 114 is configured to generate a respective interrupt upon detecting an environmental input. In general, each interrupt can identify a source of the sensor data, e.g., an identifier of a peripheral interface or sensor responsible for the interrupt. The interrupts are received and processed by one or more interrupt controllers 124. For example, upon receiving an interrupt, the interrupt controller 124 can wake a power control unit (PCU) 121, which includes a power management unit (PMU) 122 and a clock control unit 123. The PMU 122 can control which components of the device 100 receive power and how much power each component receives. The PMU 122 can communicate with the DRAM 160. Similarly, the interrupt controller 124 can wake the privacy controller 135 upon receiving an interrupt. The privacy controller 135 can also or alternatively receive and process interrupts. For example, upon receiving an interrupt (or being woken due to an interrupt), the privacy controller 135 can wake the power control unit (PCU) 121 and indicate which components of the device 100 should receive power. The clock control unit 123 can control the frequency at which the components of the device 100 operate. In some implementations, each processing component has a different clock frequency that is a multiple or a fraction of a base clock frequency. By having a clock frequency that is a multiple or a fraction of a base clock frequency, each processing component can more efficiently exchange signals with other processing components.

Upon receiving an interrupt, the PCU 121 can determine based on the source of the interrupt which other components of the ambient computing system 110 should be activated in order to further process the sensor signals causing the interrupt. In order to provide processing support for such components, the PCU 121 can wake the static random access memory (SRAM) 139 and the system communications fabric. The fabric is a communications subsystem that communicatively couples the internal components of the ambient computing system 110, their communications to external components, or some combination of these. The fabric can include any appropriate combination of communications hardware, e.g., buses or dedicated interconnect circuitry.

The static random access memory (SRAM) 139 can be a general purpose random-access memory device that can be shared by multiple processing components of the processing subsystem 130. For example, the SRAM 139 can store sensor signals, processor instructions and data, system outputs, and other data, e.g., neural network parameters of neural network models that are or will be implemented by the ambient ML engine 134. In general, an SRAM is distinguishable from DRAM in that an SRAM need not be periodically refreshed. As described in more detail below, the SRAM 139 is accessible to the processing components in the processing subsystem 130 directly or through one or more DMA controllers. In some implementations, the SRAM 139 includes multiple banks, which can each store substantially similar amounts of data, e.g., 1, 10, or 100 MB each. In addition, each individual bank can include multiple blocks that can be individually powered-down when entering the low-power state. By carefully sequencing the order that the blocks are powered-down amongst the four banks, the SRAM address space can remain contiguous.

When the PCU 121 wakes the SRAM 139, the PCU 121 can wake fewer than all of the blocks or all of the memory banks of the SRAM 139. The PCU 121 can instead wake only a number of blocks that is sufficient for the next component of the processing subsystem 130 to determine whether to further escalate powering up of components of the device 100.

The PCU 121 can also supply different power levels to different blocks of the SRAM 139. For example, in the monitoring power state, the PMU 122 can supply a lower, retention voltage to the entire SRAM 139 to reduce its power consumption. The PMU 122 can also supply the retention voltage to the SRAM 139 if no processing components need to access to the SRAM 139. In the processing power state, the PMU 122 can provide normal voltage to all or portions of the SRAM 139 and lowered or no voltage to other parts of the SRAM 139.

During the process of handling an interrupt, the ambient computing system 110 can also wake one or more DMA controllers 128. The DMA controllers 128 can manage DMA pathways that allow higher data bandwidth for incoming sensor signals. For example, a DMA controller 128 can be used to continuously stream audio data from a microphone into the SRAM 139 for access by processing components in the processing subsystem 130. Conversely, a DMA controller can also be used to continuously stream audio data stored in the SRAM 139 for output as sound through one or more speakers. The DMA controllers 128 can also be used to stream any appropriate sensor data into the SRAM 139, but using programmed IO may be computationally cheaper than activating a DMA controller for small quantities of data. Thus, the ambient computing system 110 can activate and use the DMA controllers 128 for relatively high-bandwidth sensor data, e.g., audio data and radar data, and can used programmed IO for other types of sensor data.

After preparing the fabric and the SRAM 139, the PCU 121 can then use the interrupts to determine which other component of the processing subsystem 130 to wake. For example, the PMU 122 can control whether power is provided to the low-power CPU 132, the low-power DSP 136, or other components of the processing subsystem 130 depending on which of one or more sensors generated an interrupt. In some implementations, the peripheral interfaces 114 and the components of the control subsystem 120 are the only components of the device 100 that are powered on in a monitoring power state, which is a power state in which the system is waiting to receive interrupts due to environmental inputs to the computing device.

The processing components of the processing subsystem 130 include a low-power CPU 132, an ambient ML engine 134, a low-power DSP 136, and a high-power DSP 138. In some implementations, the processing subsystem has multiple instances of one or more of these components, e.g., multiple low-power DSPs or multiple high-power DSPs. For example, the processing subsystem 130 can have one high-power DSP that is dedicated to processing audio signals and a separate high-power DSP that is dedicated to processing radar signals. Alternatively or in addition, the processing subsystem 130 can have a high-power DSP that is dedicated to processing image data. Of course, it will be appreciated that one or more of the components shown as making up the processing subsystem 130 may be optional, depending on the specific implementation. For example, some implementations may not comprise all components shown. For example, some implementations may not comprise a separate high-power DSP that is dedicated to processing radar signals. It will also be appreciated that one or more components shown as making up the control subsystem 120 may also be optional.

In the monitoring power state, the processing components in the processing subsystem 130 can be maintained in a retention mode. The PCU 121 can maintain a component in retention mode by reducing or eliminating power that is provided to the component. For example, in the retention mode, the PCU 121 can supply a processing component with just enough power to maintain register states, but not enough power to process data in the registers.

The low-power CPU 132 can be a general-purpose programmable processor that includes registers, control circuitry, and an arithmetic logic unit (ALU). In general, the low-power CPU 132 consumes less power than the main CPU cluster 140 of the computing device, and may contain fewer processing cores. In some implementations, the low-power CPU 132 is primarily a scalar processor that operates on single instructions and single data inputs.

The low-power CPU 132 can receive interrupts and sensor signals when the system enters the processing power state. Based on the type of sensor signals the low-power CPU 132 receives and based on the properties of those sensor signals, the low-power CPU 132 can determine that other components of the system should be activated, e.g., the communications fabric, the DMA controllers 128, the SRAM 139, or some combination of these. After activating these components, the low-power CPU 132 can optionally return to a non-operational state.

The low-power CPU 132 can provide the sensor signals, or a processed version thereof, to the ambient ML engine 134 for further interpretation. For example, if the low-power CPU 132 receives sensor signals corresponding to accelerometer input, the low-power CPU 132 can determine that the ambient ML engine 134 should further process the sensor signals. For example, the ambient ML engine 134 can then further process the sensor signals to determine that the signals represent walking, jogging, biking, falling, or traveling in a car.

The low-power CPU 132 can also bypass the ambient ML engine 134 for some signals. If, for example, the low-power CPU 132 receives a sensor signal corresponding to a simple touch input on a touch interface of the computing device, the low-power CPU 132 can process the touch input without the aid of other processing components, e.g., by causing the display of the computing device to be turned on by the main CPU cluster 140 or a graphics processor. The low-power CPU 132 can also determine that the main CPU cluster 140 of the computing device, or another component of the computing device outside of the device 100, should further process certain sensor signals. The low-power CPU 132 can make such a determination, for example, if it determines that no other processing components in the device 100 can properly process the sensor signals.

One task of the ambient ML engine 134 is to use sensor signals to perform an inference pass over a model to generate an output that may trigger disabling or enabling components. The output of the ambient ML engine 134 may be provided to the privacy controller 135. The output of the ambient ML engine 134 may indicate one or more environment conditions or contexts. For example, the output of the ambient ML engine 134 may indicate a type of interaction, a geographic location, one or more recognized objects, one or more recognized persons, one or more recognized sounds such as recognized voices, etc. In other words, the ambient ML engine 134 can receive sensor signals, or a processed version thereof generated by the low-power CPU 132 or another processing component, and the ambient ML engine 134 can generate an output that represents which other components of the device 100 that should be disabled or enabled. The components that may be disabled or enabled may include, for example, one or more of the peripheral sensors 112. For example, when the output of the ambient ML engine 134 indicates a condition or context associated with private or otherwise sensitive matters, the privacy controller 135 receiving the output may disable the audio sensors 102, the vision sensors 107 (e.g., one or more cameras of the device 100), the radar sensors 104, and/or the GPS sensor 108. The components that may be disabled or enabled may further or alternatively include processing components. For example, when the output of the ambient ML engine 134 indicates a condition or context associated with private or otherwise sensitive matters, the privacy controller 135 receiving the output may disable a monitoring state of the ambient computing system 110 such that the ambient ML engine 134 no longer receives sensor input, and/or may disable one or more modules of the ambient ML engine 134 (e.g., that implement one or more machine learning models). The output generated by the ambient ML engine 134 can explicitly specify a combination of component IDs or an identifier of an enumerated power state or the output can be a representation of a power state that is interpreted by a low-power processing component, e.g., the privacy controller 135, the low-power CPU 132, or the low-power DSP 136, in order to identify components that should be disabled or enabled given the environment condition(s) or context indicated by the output of the ambient ML engine 134.

As part of this process, the low-power processing component can explicitly or implicitly determine whether any components need to be disabled, or enabled or wakened. For example, the low-power processing component can determine, based on the output of the ambient ML engine 134, that the identified environment condition(s) or context are not associated with any private or otherwise sensitive matters and, therefore, that the system can transition back to the monitoring power state without any components being disabled. As another example, the low-power processing component can determine, based on the output of the ambient ML engine 134, that the identified environment condition(s) or context are associated with any private or otherwise sensitive matters and, therefore, that the system can disable the monitoring power state and/or particular components of the computing device 100.

In disabling or enabling components of the computing device 100 based on the output of the ambient ML engine 134, the privacy controller 135 may send one or more signals to the PMU 122. The one or more signals sent to the PMU 122 may contain an ID or another identifier for each of the components of the device 100 that should be enabled or disabled. The PMU 122 may disable one or more components based on the received signals.

In disabling or enabling components of the computing device 100 based on the output of the ambient ML engine 134, the privacy controller 135 may disable an input/output (I/O) channel between one or more sensors of the peripheral sensors 112 and other components of the ambient computing system 110. For example, the privacy controller 135 may disable an I/O channel between one or more sensors of the peripheral sensors 112 and their respective peripheral interfaces of the peripheral interfaces 114. As another example, the privacy controller 135 may disable an I/O channel between one or more sensors of the peripheral sensors 112 and the ambient ML engine 134.

The ambient computing system 110 can be configured to block the transmission of data during the inference pass from being written to components of the device 100 external with respect to the ambient computing system 110. Specifically, the ambient computing system 110 can be configured to block the transmission of data to the main CPU cluster 140, the main ML engine 150, and/or the DRAM 160 during the inference pass. For example, when the privacy controller 135 receives the output of the ambient ML engine 134, the and identifies, based on the received output, an environment condition or context associated with a private or otherwise sensitive matter, the privacy controller 135 may prevent particular data being transmitted from the ambient computing system 110 to the DRAM 160. As an example, the audio sensors 102 may obtain audio data that includes a conversation that the ambient computing system 110 transcribes by leveraging, for example, a speech recognition model as described in more detail below. The ambient computing system 110 can activate a processing component to execute code to cause a display of the device 100 to present the transcription. As an example, the display may be an ambient display of the ambient computing system 110 that is activated by the low-power CPU 132. Alternatively, the ambient computing system 110 can activate the main CPU cluster 140 to display the transcription on a display of the device 100.

However, prior to, for example, presenting a transcription on a display of the device 100, the privacy controller 135 may determine that the conversation is intended to be private based on the output of the ambient ML engine 134, e.g., based on a transcription of the conversation, based on the identified participants in the conversation, and/or based on the location of the conversation. In response to this determination, the privacy controller 135 may prevent the transcription of the conversation, the location data from the GPS sensor 108, and/or the recognition data (e.g., data identifying the participants of the conversation, underlying voice data from the audio sensors 102, underlying image data from the vision sensors 107, etc.) from being transmitted to the main CPU cluster 140, the main ML engine 150, and/or the DRAM 160.

As another example, the audio sensors 102 may obtain audio data that includes a conversation that the ambient computing system 110 transcribes. The privacy controller 135 may determine that the conversation is not intended to be private based on the output of the ambient ML engine 134, e.g., based on a transcription of the conversation, based on the identified participants in the conversation, and/or based on the location of the conversation. In response to this determination, the privacy controller 135 may then permit the data associated with the conversation, e.g. the transcription of the conversation, the location data from the GPS sensor 108, and/or the recognition data, to be transmitted to the main CPU cluster 140, the main ML engine 150, and/or the DRAM 160.

The ambient ML engine 134 can also implement other machine learning models for processing sensor signals. For example, the ambient ML engine 134 can implement a simplified speech recognition model that allows the ambient ML engine 134 to recognize some voice-based commands and/or specific persons based on their voice. Because the model may be installed on a mobile computing device with limited memory capacity, the number of recognized commands or persons may be smaller than for online voice recognition processes. The output of the speech recognition model may include one or more identified persons. The ambient ML engine 134 can provide the output to the privacy controller 135, the low-power CPU 132, or another processing component, for further action.

The ambient ML engine 134 can alternatively or in addition implement a machine learning model that provides on-chip automatic speech recognition. In other words, the ambient ML engine 134 can perform inference passes through the model in order to generate a live transcription of speech captured in the audio signals.

As another example, the ambient ML engine 134 can implement a text-to-speech model that generates audio output signals from particular text inputs, in which the audio output signals can be interpreted as human speech in a particular language by users. In some implementations, the device 100 can use a speech recognition model and the text-to-speech model in tandem to provide a low-power dialogue engine. For example, after the ambient ML engine 134 recognizes a particular command, the low-power CPU 132 can take particular actions to effectuate the command and also to provide a particular text response back to the ambient ML engine 134. The ambient ML engine 134 can then use the text-to-speech model to generate an audio output representing a response to the initial command. In some implementations, the entire data flow of speech recognition, action execution, and text-to-speech response can be performed without ever waking up the main CPU cluster 140 of the device.

For example, if a user provides the voice command, "louder," the ambient ML engine 134 can generate an output representing that the audio signals corresponding to a voice command to increase the volume of music being played by the device. The ambient ML engine 134 can provide the output to the low-power CPU 132, which can effectuate the command by issuing a signal to one or more integrated speaker subsystems. The low-power CPU 132 can then provide a text response, "volume at level 5," to the ambient ML engine 134. The ambient ML engine 134 can then process the text response with the text-to-speech model to generate an audio output, which the device can play over the one or more integrated speaker subsystems. Thus, the ambient computing system 110 process the entire dialogue sequence without waking up the main CPU of the device.

The ambient ML engine 134 can also implement any of a variety of other models. The ambient ML engine 134 can also implement a gesture recognition model that interprets features of hand gestures made by a user of the computing device 100. For example, the inputs to the model can be processed radar signals received by the computing device 100 through the radar sensors 104, and the output of the model can be predictions of gestures that the user has made. Each hand gesture can correspond to a particular command, and the ambient ML engine 134 can provide the output to the privacy controller 135, the low-power CPU 132, or another processing component, for further action.

The ambient ML engine 134 can also implement a facial recognition model that interprets facial features of a user of the device 100 and/or of other persons. For example, the inputs to the model can be processed images received by the computing device 100 through the vision sensors 107, and the output of the model can be the identity of one or more persons. The ambient ML engine 134 can provide the output to the privacy controller 135, the low-power CPU 132, or another processing component, for further action.

The ambient ML engine 134 can also implement a location model that identifies an address, business, and/or residence associated with a location of the device 100. For example, the inputs to the model can be GPS coordinates received by the computing device 100 through the GPS sensor 108, and the output of the model can be an address, business, and/or residence. In determining an address, business, and/or residence based on location data, the ambient ML engine 134 may refer to map data, e.g. stored in the SRAM 139. Map data may be updated overtime, e.g., by input from a user of the device 100 or periodically by pulling updated map data from the DRAM 160 or from the internet. For example, new map data may be continuously, constantly, or periodically updated and stored on the DRAM 160. This map data may then be accessed by the ambient computing system 110 (e.g., and stored in the SRAM 139) periodically or based on the current state of the ambient computing system 110, e.g. new map data may only be accessed when the ambient computing system 110 is in a monitoring state.

The ambient ML engine 134 can also implement an environment condition or context model that identifies particular environment conditions based on sensor data and/or outputs from other machine learning models. The conditions or contexts may include, for example, particular locations that correspond with sensitive/private matters or a set privacy level (e.g., church, law firm, doctor's office, etc.), particular identified persons that correspond with sensitive/private matters or a set privacy level, particular objects that correspond with sensitive/private matters or a set privacy level (e.g., legal documents, medical documents, etc.), particular sounds that correspond with sensitive/private matters or a set privacy level (e.g., conversations with doctor or attorney). The output of the model may be provided to the privacy controller 135 by the ambient ML engine 134 and/or to one or more additional models of the ambient ML engine 134.

The ambient ML engine 134 can also implement a power state model that identifies the power state of one or more components of the device 100 based on the identified environment condition(s) or context(s). For example, the inputs to the model can be the output of the environment condition or context model. The output of the model may indicate what components of the device 100 should be disabled or enabled, and may additionally include a method for disabling or enabling the respective components. The output of the model may be provided to the privacy controller 135. This model, like one or more of the other models, may be updated over time based on input from a user of the device 100. Alternatively, the ambient ML engine 134 may refer to a lookup table to determine the power states for particular components of the device 100 based on the identified environment condition(s) or context(s).

The ambient ML engine 134 can include one or more memory banks for storing model parameters and other model configuration information. For example, the ambient ML engine 134 can store data representing neural network connections and neural network parameters. The ambient ML engine 134 can include one or more multiply accumulate (MAC) units and one or more sum registers for computing neural network activations or other neural network layer outputs, and a controller for controlling data exchange between the memory banks and the MAC units. The ambient ML engine 134 can also include instruction memory, direct memory access paths, registers, and other processing components. In some implementations, the ambient ML engine 134 is a machine learning compute tile that is configured to accelerate the computation of machine learning inference passes.

The low-power DSP 136 and the high-power DSP 138 are special-purpose processors configured for efficient decoding and processing of highly-vectorized signals. The processing subsystem 130 can include a variety of DSPs that are designed for different purposes. For example, the processing subsystem 130 can include a DSP that is configured to process radar signals, a DSP that is configured to process audio signals, a DSP that is configured to perform dataplane algorithms, a DSP that is configured to process wireless communications signals, and a DSP that is configured to process GPS signals, to name just a few examples.

As described above, the low-power DSP 136 can perform the initial interpretation of sensor signals from the control subsystem 120. The low-power DSP 136 can also perform other signal processing tasks as well. In general, high-power DSPs consume higher levels of power than low-power DSPs because they have more active registers, they access and process more data in parallel, because they rely more heavily on memory operations, or some combination of these.

The control subsystem 120 can also include a timer 129, which is an electronic timer that can detect system malfunctions and resolve those malfunctions. During normal operation, the system can regularly reset the timer 129 to prevent the timer 129 from timing out. If, e.g., due to a hardware fault or a program error, the system fails to reset a timer, the timer will elapse and generate a timeout signal. The timeout signal can be used to initiate one or more corrective actions. A corrective action can include placing the system in a safe state and restoring normal system operation.

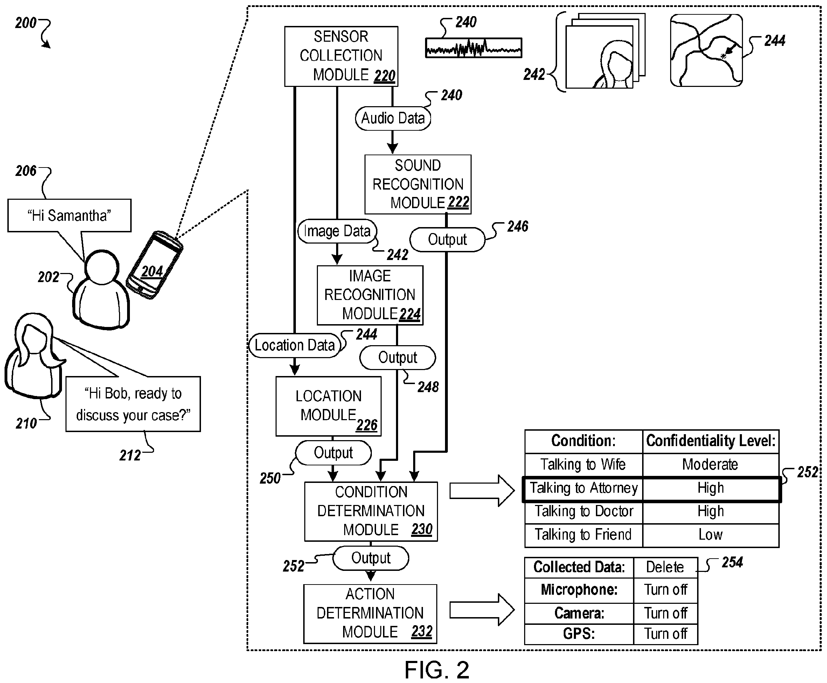

FIG. 2 is a diagram of an example ambient computing system 200 changing the power state of components based on determined conditions. In some implementations, the ambient computing system 200 is the ambient computing system 110 shown in FIG. 1.

The ambient computing system 200 can be part of the computing device 204. In some implementations, the device 204 is the device 100 shown in FIG. 1.

As shown, a user 202 of the device 204 is having an audible conversation with a person 210. During the conversation between the user 202 and the person 210, the ambient computing system 200 is in a monitoring state. While in a monitoring state, a sensor collection module 220 of the ambient computing system 200 obtains sensor data from various sensors of the device 204. The sensor collection module 220 may be part of the ambient ML engine 134 as shown in FIG. 1. The sensors of the device 204 can include, for example, one or more audio sensors, one or more radar sensors, one or more touch sensors, one or more vision sensors, a GPS sensor, one or more acceleration sensors, etc.

The monitoring state of the ambient computing system 200 may be triggered by an external event detected by the device 204. The external event may include speech of any person (e.g., detected using one or more audio sensors such as a microphone), speech of a particular person such as the user 202, a particular sound (e.g., police siren, emergency siren, organ playing or playing of other instruments, etc.) a determination that a person is nearby (e.g., detected using one or more radar sensors), a person looking at the device 204 (e.g., detected using one or more vision sensors such as a camera), a particular person, such as the user 202, looking at the device 204, movement of the device (e.g., detected using one or more accelerometers), a person touching the device 204 or a specific area of the device such as a touch display or an external button (e.g., detected using one or more touch sensors or button sensors), etc.

A monitoring state may be differentiated from a non-monitoring state based on the amount information that is collected, the sensors of the device 204 that are enabled, and/or differences in how the collected sensor data is processed by the ambient computing system 200. For example, during a non-monitoring state, the ambient computing system 200 may only analyze sensor data collected over a relatively small time period when compared with the time period that sensor data is collected and analyzed while the device 204 is in a monitoring state. As another example, during a non-monitoring state, less sensors of the device 204 may be enabled (e.g., the touch sensors, the microphone, and the GPS turned on and collecting data) when compared to the number of sensors that are enabled while the device 204 is in a monitoring state (e.g., all sensors turned on and collecting data). As another example, the ambient computing system 200 may process the obtained sensor data differently when in a non-monitoring state than in a monitoring state. With respect to speech, the ambient computing system 200 may analyze data collected by one or more audio sensors to only to determine if speech is occurring, if the user 202 is speaking, or if a hot word has been spoken in a non-monitoring state. Whereas, in a monitoring state, the ambient computing system 200 may process the audio data to identify individual speakers and/or to transcribe the speech, e.g., using a sound recognition module 222 described in more detail below.

There may be multiple monitoring states or levels within a monitoring state, e.g. defined by which sensors are enabled or disabled, which sensors are collecting data, and/or the type of processing that is to be performed on the sensor data. Similarly, there may be multiple non-monitoring states or levels within a non-monitoring state, e.g. defined by which sensors are enabled or disabled, which sensors are collecting data, and/or the type of processing that is to be performed on the sensor data.

As shown, the sensor collection module 220 receives or collects audio data 240 from one or more audio sensors, image data 242 from one or more vision sensors, and location data 244 from a GPS sensor. The audio data 240 can include one or more sound clips. Here, the audio data 240 includes a sound recording of the conversation between the user 202 and the person 210. The image data 242 may include one or more images or one or more videos. Here, the image data 242 includes multiple pictures that include a face of the person 210. The location data 244 may include GPS coordinates. Here, the location data 244 indicates a location of the device 204 and, accordingly, the location of the user 202 and the person 210.

Contemporaneous with receiving or collecting the sensor data or signals at the sensor collection module 220, an interrupt may be generated. In response to the interrupt, the ambient computing system 200 can disable or suspend a monitoring state of the device 204 such that, for example, one or more sensors of the device are prevented from collecting data or the I/O channel(s) of one or more sensors of the device 204 are disrupted. For example, the interrupt can be received and processed by one or more interrupt controllers 124 as shown in FIG. 1 that may wake or notify the privacy controller 135 of the interrupt. In response to the interrupt, the privacy controller 135 may disable or suspend a monitoring state of the device 204 such that, for example, one or more sensors of the device are prevented from collecting data or the I/O channel(s) of one or more sensors of the device 204 are disrupted.

The sensor collection module 220 can provide the audio data 240 to a sound recognition module 222. The sound recognition module 222 can be a part of the ambient ML engine 134 as shown in FIG. 1. The sound recognition module 222 can analyze the received audio data 240 by performing speech recognition on the audio data 240 and/or by comparing the audio data 240 with known sounds (e.g., police siren, emergency siren, organ playing or playing of other instrument, etc.). In performing speech recognition on the audio data 240 and/or comparing the audio data 240 with known sounds, the sound recognition module 222 may leverage one or more machine learning models.

In performing speech recognition on the audio data 240, the sound recognition module 222 may determine if any speech is present in the audio data 240, may determine if there is more than one speaker speaking in the audio data 240, may determine the number of speakers present in the audio data 240, may transcribe the speech in the audio data 240, may associate all or part of the speech in the audio data 240 with a particular speaker, may recognize the voice of a particular speaker present in the audio data 240 that one or more machine learning models of the sound recognition module 222 have been trained to recognize, may identify one or more persons speaking in the audio data 240 based on recognizing the voice of the one or more speakers, may associate all or part of the speech in the audio data 240 with a particular person, etc. The ambient computing system 200 can include sound bites of voices from one or more particular persons that the sound recognition module 222 has been trained to recognize and/or that the sound recognition module 222 may use for comparison. The sound bites stored on the ambient computing system 200 may be updated or replaced when new data becomes available or periodically, e.g., every day, every week, every month, etc.

In comparing the audio data 240 with known sounds, the sound recognition module 222 may recognize one or more sounds present within the audio data 240, and may identify the recognized sounds and/or a probable source for those sounds. For example, if the audio data 240 included a sound from a siren, the sound recognition module 222 may identify that the audio data 240 includes an emergency siren and that the sound was likely emanating from an ambulance instead of, for example, a police car or a fire truck. The ambient computing system 200 can include sound bites of various sounds that the sound recognition module 222 has been trained to recognize and/or that the sound recognition module 222 may use for comparison. The sound bites stored on the ambient computing system 200 may be updated or replaced when new data becomes available or periodically, e.g., every day, every week, every month, etc.

Upon analyzing the received audio data 240, the sound recognition module 222 produces an output 246. The output 246 can include the following table:

| | |
|---|---|
| **Audio Type:** | Speech |
| **# of Particpants:** | Two |
| **Participant 1:** | Device Owner / Bob |
| **Participant 2:** | Unknown |
| **Transcription (P1):** | "Hi Samantha." |
| **Transcription (P2):** | "Hi Bob, ready to discuss your case?" |

The output 246 includes indications of one or more determinations made by the sound recognition module 222. Here, the output 246 includes an indication that speech is present in the audio data 240, that there are two persons speaking in the audio data 240, that a first person speaking is the user 202, that it was unable to identify a second person speaking (e.g., the person 210), that first person (e.g., the user 202) speaks "Hi Samantha", and that the second person responds "Hi Bob, ready to discuss your case?"

The sensor collection module 220 can also provide the image data 242 to an image recognition module 224. The image recognition module 224 can be a part of the ambient ML engine 134 as shown in FIG. 1. The image recognition module 224 can analyze the received image data 242 by performing image recognition (e.g., facial recognition) on the image data 242 and/or to comparing the image data 242 with known objects (e.g., vehicles in general, particular vehicles, animals, pets, particular landmarks, etc.). In performing image recognition on image data 242 and/or comparing the image data 242 with known objects, the image recognition module 224 may leverage one or more machine learning models.

In performing image recognition on the image data 242, the image recognition module 224 may determine if any persons are present in the image data 242, may determine if any faces of persons are present in the image data 242, may recognize a particular person present in the image data 242, may determine if multiple persons are present in the image data 242, may determine if multiple faces of persons are present in the image data 242, may recognize a particular face corresponding to a particular person present in the image data 242, may identify a particular person in the image data 242 based on recognizing the person or the face corresponding to the person, may associate a particular image or a portion of a particular image within the image data 242 with an identified person, etc. The ambient computing system 200 can include images of one or more particular persons or faces of particular persons that the image recognition module 224 has been trained to recognize and/or that the image recognition module 224 may use for comparison. The images stored on the ambient computing system 200 may be updated or replaced when new data becomes available or periodically, e.g., every day, every week, every month, etc.

In comparing the image data 242 with known objects, the image recognition module 224 may recognize one or more objects present within the image data 242, may recognize one or more properties of the recognized objects (e.g., size, color, etc.), and may identify the recognized objects and/or a person corresponding to the recognized objects (e.g., an owner, a user, etc.). For example, if the image data 242 included an image of a car, the image recognition module 224 may identify that the image data 242 includes a vehicle, that the vehicle is orange, and/or that the vehicle is the user 202's car. The ambient computing system 200 can include images of various objects that the image recognition module 224 has been trained to recognize and/or that the image recognition module 224 may use for comparison. The images stored on the ambient computing system 200 may be updated or replaced when new data becomes available or periodically, e.g., every day, every week, every month, etc.

Upon analyzing the received image data 242, the image recognition module 224 produces an output 248. The output 248 can include the following table:

| | |
|---|---|
| **Image Type:** | Face |
| **# of Persons:** | One |
| **Person 1:** | Unknown |

The output 248 includes indications of one or more determinations made by the image recognition module 224. Here, the output 248 includes an indication that image data 242 included a face of a person (e.g., the person 210), that a single person was present in the image data 242, and that the image recognition module 224 did not recognize the face of the person (e.g., the person 210) present in the image data 242.

The sensor collection module 220 can also provide the location data 244 to a location module 226. The location module 226 can be a part of the ambient ML engine 134 as shown in FIG. 1. The location module 226 can analyze the received location data 244 by comparing the location data 244 with stored map data. In comparing the location data 244 with stored map data, the location module 226 may leverage one or more machine learning models.

In comparing the location data 244 with stored map data, the location module 226 may identify an address corresponding to the location data 244, may recognize the address and determine one or more corresponding persons (e.g., address is the home of the user 202, address is a doctor of the user 202, address is the work of the user 202, etc.), may determine if the identified address corresponds to a residence or a business, may identify a name of the business if the identified address corresponds to a business, may identify a type of business if the identified address corresponds to a business, may identify one or more persons that live at the address (e.g., own or rent) if the identified address corresponds to a residence, etc. For example, if the location data 244 includes GPS coordinates that correspond with the user 202's home, the location module 226 may identify the address of the user 202's home, may determine that the address is associated with a residence, may recognize the identified address and that it is home address of the user 202, and/or may identify the user 202 as a person associated with the identified address. The ambient computing system 200 can include the map data that the location module 226 can use for comparison. The map data stored on the ambient computing system 200 may be updated or replaced when new data becomes available or periodically, e.g., every day, every week, every month, etc.

Upon analyzing the received location data 244, the location module 226 produces an output 250. The output 250 can include the following table:

| | |
|---|---|
| **GPS Coordinates:** | 37.4220° N, 122.0841 ° W |
| **Address:** | 123 Amphitheatre Pkwy |
| **Address Type:** | Business |
| **Business Name:** | X, Y, and Z LLP |
| **Business Type:** | Law Firm |

The output 250 includes indications of one or more determinations made by the location module 226. Here, the output 250 includes an indication of the raw data within the location data 244 (e.g., the GPS coordinates), an indication of an address corresponding to the location data 244 ("123 Amphitheater Pkwy"), an indication that the identified address corresponds to a business, an indication of the business located at the identified address ("X, Y, and Z LLP"), and an indication of the type of business that is located at the identified address ("Law Firm").

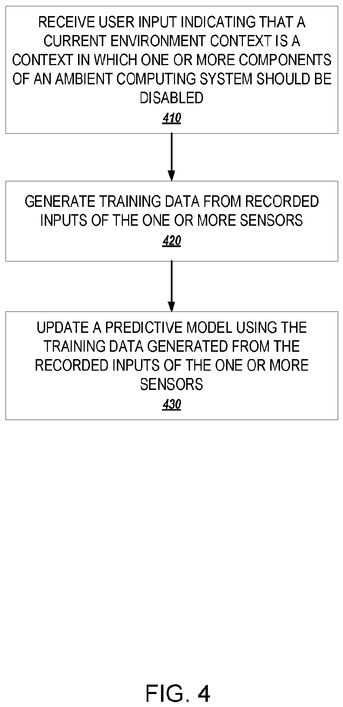

Each of the modules 222, 224, and 226 may provide their respective outputs 246, 248, and 250 to a condition determination module 230. In some implementations, the condition determination module 230 is part of the ambient ML engine 134 as shown in FIG. 1. In some implementations, the condition determination module 230 is part of the privacy controller 135 shown in FIG. 1. In some implementations, the condition determination module 230 is part of the low-power DSP 136 shown in FIG. 1. In some implementations, the condition determination module 230 is part of the high-power DSP 138 shown in FIG. 1. In some implementations, the condition determination module 230 is part of a component of the device 204 external with respect to the ambient computing system 200. For example, the condition determination module 230 can be part of the main ML engine 150 shown in FIG. 1. The condition determination module 230 can analyze the received outputs to determine one or more environment conditions or contexts indicated by the collected sensor data. In determining one or more environment conditions or contexts, the condition determination module 230 may leverage one or more machine learning models. As will be described in more detail with respect to FIG. 4, in determining one or more environment conditions or contexts, the condition determination module 230 may leverage user-specified data specific to the particular user or owner of the device 204 (e.g., the user 202).

For example, the user-specified data may include settings input by the user 202, and/or feedback from the user 202 in response to an action taken by an action determination module 232 as discussed in more detail below. The settings or feedback input by the user 202 may indicate a particular level of privacy for a particular condition or context, a particular level of privacy for an interaction (e.g., conversation, text message, phone call, video conference, etc.) with a specified person (e.g., significant other, doctor, lawyer, spouse, colleague, client, etc.) or a specified group of persons (e.g., work colleagues, employees, clients, medical professionals, legal professionals, friends, etc.), a particular level of privacy for a particular location (e.g., home, work, significant other's home, church, etc.) or type of locations (e.g., medical offices, law firms, churches, etc.), a particular level of privacy for a type of interaction (e.g., in-person conversation, phone conversation, video conference, group interaction, interaction with a single person, etc.), a particular level of privacy based on the content of the interaction (e.g., interactions indicate or disclose confidential information, interactions indicate or disclose intimate information, interactions indicate or disclose legal information, interactions indicate or disclose medical information, etc.), particular sensors that should be disabled or have their I/O channel interrupted for a given level of privacy (e.g., all sensors except the touch or button sensors of the device 204 are disabled when privacy level is determined to be high, audio sensors and vision sensors are disabled when the privacy level is determined to be moderate, no sensors disabled when the privacy level is determined to be low, etc.), actions to take with collected data for a given level of privacy (e.g., delete collected data when privacy level is determined to be high, prevent transmission of collected data to main memory when privacy level is determined to be high, store data temporarily on the ambient computing system 200 when privacy level is determined to be moderate, allow some data to be transmitted to the main memory of the device 204 but not other data-such as transcriptions of audio data - when the privacy level is determined to be moderate, permit storage and transmission of all collected data when privacy level is determined to be low, etc.)

The environment conditions or contexts may include or indicate, for example, a type of interaction, recognized objects, recognized people, recognized faces, recognized voices, recognized sounds, geographic locations, etc. For example, the environment conditions or contexts may include or indicate an interaction with a particular persons (e.g., wife), an interaction with a type of person or a person belonging to a particular group (e.g., medical or legal professional), an interaction at a particular location (e.g., work), a particular location (e.g., home), an interaction involving multiple individuals, an interaction involving one individual other than the user 202, an interaction where confidential or otherwise private information has been revealed or is likely to be revealed, the presence of a particular person, the presence of a particular type of person or of a person belonging to a particular group, the presence of a particular object (e.g., user 202's vehicle), the presence of a particular type of object (e.g., a gun), an emergency situation, etc.

The environment conditions or contexts may be preexisting and may correspond to a particular privacy or confidentiality level. For example, there may be a high privacy level for very confidential conditions, e.g., matters involving the revelation or potential revelation of confidential information such as those corresponding to medical treatment or legal aid, or matters involving the revelation or potential revelation of intimate information. There may be a moderate privacy level for somewhat confidential conditions, e.g., matters involving interactions with spouses or significant others, matters involving interactions that take place at location where there exists an expectation of privacy (e.g., church, work, etc.), etc. There may also be a low privacy level for non-confidential conditions, e.g., matters involving interactions in public, matters involving interactions with friends, etc. In some implementations, there may be more than or less than three privacy levels. A privacy level may be customized for a given condition, e.g., directly by the user 202 or by a machine learning model trained on inputs from the user 202. A particular condition or context may have a default privacy level, e.g., with default actions (e.g., an indication of what sensors the ambient computing system 200 should disable a corresponding condition is detected). The default privacy level and/or default actions corresponding to the default privacy level may be modified, e.g., directly by the user 202 or by a machine learning model trained on inputs from the user 202.

The condition determination module 230 can identify and output one or more environment conditions or contexts that the sensor data indicates. The condition determination module 230 can also output privacy levels corresponding to the one or more identified conditions or contexts. In identifying one or more conditions or contexts, the condition determination module 230 can access, or determine, a list of potential conditions. These conditions include the user 202 talking to his wife, the user 202 talking to his attorney, the user 202 talking to his doctor, and the user 202 talking to his friend. This list of conditions may have been selected or filtered from a more expansive list of conditions based on the received output 246, 248, and/or 250. For example, the condition determination module 230 may have selected these conditions to compare with or against the received outputs 246, 248, and 250 based on the output 246 indicating that a conversation involving the user 202 and one other individual was taking place. The condition determination module 230 may select the condition of the user 202 speaking with his attorney from among the list of conditions based on information within the output 246, 248, and/or 250. For example, the condition determination module 230 may have selected the condition based on the output 246 indicating that the unknown person mentioned the word "case" during the conversation, based on the output 250 indicating that the conversation was taking place at a law firm, based on the output 248 not recognizing the person 210 as user 202's wife or friend, and/or the output 250 indicating that the conversation was not taking place at a doctor's office or at home.

The condition determination module 230 can provide an output 252 consisting of the accessed or determined condition and a corresponding privacy level to the action determination module 232. The action determination module 232 may determine one or more actions to take on the device 204 with based on the received output 252, e.g., based on the accessed or detected condition(s) and/or on the corresponding privacy level. In some implementations, the action determination module 232 is part of the privacy controller 135 shown in FIG. 1. In some implementations, the action determination module 232 is part of the ambient ML engine 134 as shown in FIG. 1.

The actions that the action determination module 232 may trigger, e.g. by outputting instructions to one or more processing components of the device 204, can include deleting all or a portion of the sensor data collected while the device 204 was in a monitoring state, transmitting all or a portion of the sensor data to one or more components of the device 204 external with respect to the ambient computing system 200 (e.g., the main CPU cluster 140, the main ML engine 150, and/or the DRAM 160), disabling one or more sensors of the device 204, enabling one or more sensors of the device 204, placing the device 204 in a non-monitoring state, disabling one or more I/O channels corresponding to one or more sensors of the device 204, and enabling one or more I/O channels corresponding to one or more sensors of the device 204.

As shown, based on the output 252 indicating that the condition is that the user 202 is talking to his attorney and/or based on the privacy level associated with the condition being high, the action determination module 232 determines to take the actions 254 with the device 204. The actions 254 include deleting the sensor data collected during the most recent monitoring state of the device 204, disabling one or more microphones of the device 204, disabling one or more cameras or vision sensors of the device 204, and disabling a GPS sensor of the device 204.

In some implementations, the action determination module 232 may have access to default actions for a given privacy level and/or a given condition. These default actions may be modified based on, for example, inputs from the user 202.

In the case where the condition determination module 230 determines that the user 202 was talking with his wife instead of with his attorney, the action determination module 232 may perform one or more actions different than the actions 254 due to the condition itself being different and/or the privacy level associated with the condition being different (e.g., a moderate level of privacy versus a high level of privacy). In this case, the action determination module 232 may choose to still disable the microphone(s) and the camera(s) of the device 204 but leave the GPS enabled. The action determination module 232 may also determine that a transcription of any collected audio data should not be performed, should be deleted if performed, or should not be transmitted to any components of the device 204 external with respect to the ambient computing system 200.

In cases where the condition determination module 230 determines that the an emergency is occurring or that an emergency is occurring in proximity to the user 202, the action determination module 232 may perform one or more actions different than the actions 254 due to the condition itself being different and/or the privacy level associated with the condition being different. In this case, the action determination module 232 may choose to enable all sensors of the device 204, to transmit all sensor data collected to components of the device 204 external with respect to the ambient computing system 200 (e.g., for storage and/or for transmission over a network), and/or to maintain or resume the monitoring state of the device 204.

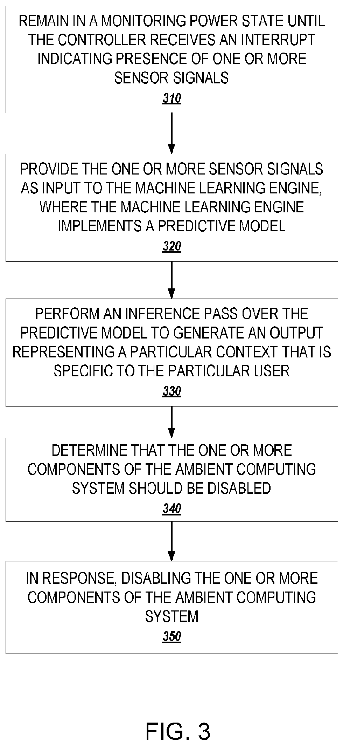

FIG. 3 is a flowchart of an example process for disabling one or more components of an ambient computing system. The process can be performed, at least in part, using the ambient computing system 110 described herein with respect to FIG. 1. The process can be performed, at least in part, using the ambient computing system 200 described herein with respect to FIG. 2.

The system remains in a monitoring power state until the controller receives an interrupt indicating presence of one or more sensor signals (310). With respect to FIG. 1, while in a monitoring power state, one or more sensors of the peripheral sensors 112 may send signals to the ambient computing system 110 containing sensor data. In response to the signals being generated or the sensor data being obtained, an interrupt may be generated. The interrupt may be received and processed by one or more interrupt controllers 124. The interrupt may correspond to or otherwise indicate the presence of the generated sensor signals or obtained sensor data. The interrupt controllers 124 may wake the privacy controller 135 and/or notify the privacy controller 135 of the interrupt. The interrupt controllers may additionally or alternatively wake the PCU 121. Based on the interrupt, the privacy controller 135 or another component of the ambient computing system 110 may prevent transmission of data from the ambient computing system 110 to components of the device 100 that are external with respect to the ambient computing system 110. For example, based on the interrupt, the privacy controller 135 or another component of the ambient computing system 110 may prevent data from being transmitted, e.g., written, to the main CPU cluster 140, to the main ML engine 150, or to the DRAM 160 (e.g., the main memory of the device 100). Specifically, the privacy controller 135 or another component of the ambient computing system 110 may disable an I/O channel between the ambient computing system 110 and the main CPU cluster 140, the main ML engine 150, and the DRAM 160.

The system provides the one or more sensor signals as input to the machine learning engine, where the machine learning engine implements a predictive model (320). For example, with respect to FIG. 1, the machine learning engine can be the ambient ML engine 134. As described in more detail above, the ambient ML engine 134 may include and leverage one or more predictive models such as, for example, a predictive model for speech recognition, a predictive model for facial recognition, a predictive model for determining environment conditions or contexts, etc.

The system performs an inference pass over the predictive model to generate an output representing a particular context that is specific to the particular user (330). For example, with respect to FIG. 2, the predictive model can be or can be part of the condition determination module 230. The condition determination module 230 can output, using the predictive model, a particular environment context that is based on data obtained by one or more sensors of the device 204. The environment context can be or correspond to one or more interactions or types of interactions, recognized persons, recognized objects, recognized situations (e.g., emergency event), geographic locations, etc. The condition determination module 230 can also output a privacy level that has been associated with the determined or identified context based on, for example, input from the user 202. The input from the user 202 may have been used to train the predictive model.

The system determines that the one or more components of the ambient computing system should be disabled (340). For example, with respect to FIG. 2, based on the output 252 of the condition determination module 230, the action determination module 232 may determine one or more actions to take. In some implementations, the action determination module 232 may leverage one or more predictive models in determining the one or more actions. The one or more predictive models may have been trained using input from the user 202. In some implementations, the action determination module 232 refers to a lookup table to identify one or more action that correspond to the determined or identified condition(s) and/or correspond to the level of privacy associated with the determined or identified condition(s) as indicated by the output 252. In some cases, determining that one or more components of the ambient computing system 200 should be disabled involves determining that the user 202 is a particular known geographic location based on the location data 244, is at a particular type of geographic location (e.g., a location corresponding to a particular type of business) based on the location data 244, recognizing the speech or voice of a particular persons based on the audio data 240, recognizing the speech or voice of persons other than the user 202 based on the audio data 240, recognizing the face of a particular person based on the image data 242, recognizing the face of a person other than the user 202 based on the image data 242, etc.

The system disables the one or more components of the ambient computing system (350). For example, with respect to FIG. 2, based on the output 252 of the condition determination module 230, the action determination module 232 may take one more actions or may provide instructions to a processing component (e.g., the PCU 121) to take the one or more actions. The actions may include disabling one or more sensors of the device 204, cutting power to one or more sensors of the device 204 (e.g., by sending instructions to the PCU 121 for the PMU 122 to cut power to those one or more sensors), disabling an I/O channel between one or more sensors of the device 204 and components of the ambient computing system 200, disabling one or more processing components or modules of the ambient computing system 200, and/or disabling an I/O channel between the ambient computing system 200 and one or more other components of the device 204 (e.g., a primary memory of the device 204). For example, based on an output of the condition determination module 230, e.g., based on an output of one or more predictive models of the condition determination module 230, the action determination module 232 may perform or may instruct a processing component of the ambient computing system 200 to perform one or more of disabling one or more audio sensors of the device 204 such as a microphone, disabling one or more vision sensors of the device 204 such as a camera, disabling one or more radar sensors of the device 204, or disabling a location sensor of the device 204 such as a GPS sensor.

In some cases, based on an output of the condition determination module 230, e.g., based on an output of one or more predictive models of the condition determination module 230, the action determination module 232 may disable or provide instructions to a processing component of the device 204 to disable all or part of the sound recognition module 222, the image recognition module 224, and/or the location module 226. Specifically, for example, the action determination module 232 may disable or provide instructions to a processing component of the device 204 to disable a transcription module or feature (e.g., of the sound recognition module 222) that automatically transcribes human speech found in a given sound clip.

FIG. 4 is a flowchart of an example process for training a machine learning model locally on a device. The process can be performed, at least in part, using the ambient computing system 110 described herein with respect to FIG. 1. The process 400 can be performed, at least in part, using the ambient computing system 200 described herein with respect to FIG. 2.

The system receives user input indicating that a current environment context is a context in which one or more components of an ambient computing system should be disabled (410). With respect to FIG. 1, the ambient computing system 110 may receive the input from a user of the device 100 through one or more of the peripheral sensors 112 such as, for example, the audio sensors 102 when the user provides vocal input, the touch sensors 106 when the user provides touch input, or the vision sensors 107 when the user provides visual input such as gestures or sign language. The user input may include or indicate the one or more sensors that should be disabled (or have their I/O channels disabled), may indicate a current condition or context (e.g., by entering a description, by selecting a condition or context from a list of conditions and contexts, etc.), may indicate what should happen with sensor data collected when the device 100 is in a monitoring state (e.g., delete all, delete data from specified sensors, transmit all, transmit data from specified sensors, etc.), may indicate a privacy level that should be associated with the condition, and/or may indicate one or more additional actions that should be taken when the condition or context is detected (e.g., disabling monitoring state of device 204 for thirty minutes).

In some cases, the received user input identifies a particular user who uttered speech during a recent time period. For example, the user input may indicate that all audio sensors, all vision sensors, the GPS sensor, and the transcription module or feature should be disabled when the device 204 recognizes the voice of the person the user last spoke with. A recent time period may include the last minute, the last five minutes, the last thirty minutes, the last hour, the last twelve hours, etc.

In some cases, the current environmental context includes data including the voice or speech of a particular person or persons, a representation of a current location of the user 202, a current or recent interaction involving the user 202, a face of a particular person or persons, etc.

In some implementations, user input may be requested. For example, with respect to FIG. 2, once the action determination module 232 determines one or more actions 254 to take, the ambient computing system 200 may request that the user 202 approve each action of the actions 254 or to approve the actions 254 collectively. Alternatively, the ambient computing system 200 can automatically perform the actions 254 or provide instructions to a processing component of the device 204 to perform the actions 254, and, afterwards, can ask the user 202 for feedback. For example, the ambient computing system 200 may request a binary input of the user 202, e.g., whether the user 202 found the actions taken to be appropriate. The ambient computing system 200 can also or alternatively request more detailed input, e.g., more detailed input may be requested if the user 202 indicates that the actions taken by the ambient computing system 200 for determined or identified conditions were not appropriate. The input from the user 202 may indicate one or more actions to take with respect to a given condition or context, may indicate a privacy level that should be associated with a given condition or context, or may indicate that one or more determined or identified conditions or contexts were not correct.

The system generates training data from recorded inputs of the one or more sensors (420). With respect to FIG. 1, generating training data may include the ambient computing system 110 compiling and/or storing all or a portion of sensor data from one or more of the peripheral sensors 112. Generating training data may include collecting additional sensor data from one or more of the peripheral sensors 112. For example, in response to the ambient computing system 110 receiving the user input, the ambient computing system 110 may enable all peripheral sensors 112 of the device 100 and collect sensor data from each of the peripheral sensors 112. The collected sensor data may be analyzed, e.g. by one or more modules or predictive models (e.g., the sound recognition module 222, the image recognition module 224, the location module 226, etc.). All or a portion of the output of the analysis may be stored, e.g. temporarily on the SRAM 139. In some implementations, all or a portion of the collected data may be stored, e.g., temporarily on the SRAM 139.

In some implementations, training data may be generated based on user input received after one or more conditions or contexts have been determined or identified, after one or more actions have been determined or identified, or after one or more identified or determined actions have been performed. For example, with respect to FIG. 2, when the input from the user 202 is associated with the condition of the user talking to his attorney or the actions 254 to be taken, the ambient computing system 200 may identify the sensor data 240, 242, and 244 that the identified or determined condition was based on. The ambient computing system 200 can compile the sensor data 240, 242, and 244 and/or analyze the sensor data. The ambient computing system 200 can store all or a portion of the compiled data or the output of the analysis on, for example, the SRAM 139 shown in FIG. 1. In compiling the sensor data 240, 242, and 244, the ambient computing system 200 may generate training data for one or more predictive models (e.g., of the ambient ML engine 134 shown in FIG. 1). Additionally or alternatively, in storing all or a portion of the compiled data or analysis output, the ambient computing system 200 may generate training data for one or more predictive models (e.g., of the ambient ML engine 134 shown in FIG. 1). The ambient computing system 200 can also store all or a portion of the user input and can associate the user input with the generated training data. In associating the user input with the generated training data, the training data may be updated or modified.

The system updates a predictive model using the training data generated from the recorded inputs of the one or more sensors (430). With respect to FIG. 2, the ambient computing system 200 may use the generated training data to update one or more predictive models. For example, the user input may be used to update one or more predictive models of the condition determination module 230. As another example, the training data may be used to update one or more predictive models of the action determination module 232.

In implementations where user input was requested, the training data may be used to update one or more predictive models of the condition determination module 230 when the user input indicated that the identified or determined condition or context was not correct. Similarly, the training data may be used to update one or more predictive models of the condition determination module 230 when the user input indicated that the identified privacy level corresponding to the identified or determined condition was not correct. As another example, the training data may be used to update one or more predictive models of the action determination module 232 when the user input indicated that one or more actions of the actions 254 should not have been taken.

The examples above primarily described the ambient computing system as being implemented as a system-on-a-chip having integrated processing components. However, the same techniques can also be used to implement an ambient computing system using other arrangements of the underlying computing components. For example, one or more processing components of the ambient computing system, including the ambient ML engine, can be implemented as a co-processor or in a stand-alone chip.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

Embodiments of the subject matter described in this specification can be implemented in a computing system that includes a back-end component, e.g., as a data server, or that includes a middleware component, e.g., an application server, or that includes a front-end component, e.g., a client device having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what is being or may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. An ambient computing system comprising:
one or more sensors configured to generate sensor signals; and
a plurality of processing components including a machine learning engine, and one or more other processing components,
wherein the ambient computing system is configured to perform operations comprising:
remaining in a monitoring power state until a controller receives an interrupt indicating presence of one or more sensor signals,
providing the one or more sensor signals as input to the machine learning engine, wherein the machine learning engine implements a predictive model trained on user-specific data that is specific to a particular user,
performing, by the machine learning engine, an inference pass over the predictive model to generate an output representing a particular context that is specific to the particular user,
determining, based on the particular context for the particular user, that one or more components of the ambient computing system should be disabled, and
in response to said determining that one or more components of the ambient computing system should be disabled, disabling the one or more components of the ambient computing system, **characterised in that** disabling the one or more components of the ambient computing system comprises disabling one or more of the sensors, disabling a transcription module that automatically transcribes human speech, and/or disabling an I/O channel between the sensors and other components of the ambient computing system.

2. The system of claim 1, wherein disabling one or more of the sensors comprises cutting power to the one or more sensors.

3. The system of claim 1 or 2, wherein disabling one or more of the sensors comprises disabling a microphone, a camera, a vision sensor, a radar sensor, or a location sensor.

4. The system of any preceding claim, wherein determining, based on the particular context for the particular user, that one or more of the sensors should be disabled comprises determining that audio signals received by one or more microphones include speech uttered by a particular person previously identified by the user.

5. The system of any preceding claim, wherein the ambient computing system is configured to block transmission of data during the inference pass from being written to main memory, a main CPU cluster, or a main machine learning engine.

6. The system of any preceding claim, wherein the ambient computing system is configured to perform a training process to update the predictive model with user-specific data, wherein performing the training process comprises performing operations comprising:
receiving user input indicating that a current environmental context is a context in which one or more components of the ambient computing system should be disabled;
generating training data from recorded inputs of the one or more sensors; and
updating the predictive model using the training data generated from the recorded inputs of the one or more sensors.

7. The system of claim 6, wherein receiving the user input comprises receiving user input identifying a particular user who uttered speech during a recent time period.

8. The system of claim 6 or 7, wherein the current environmental context comprises data including a representation of a current location of the user.

9. A computer implemented method comprising:
remaining in a monitoring power state until a controller receives an interrupt indicating presence of one or more sensor signals generated by one or more sensors;
providing the one or more sensor signals as input to a machine learning engine, wherein the machine learning engine implements a predictive model trained on user-specific data that is specific to a particular user;
performing, by the machine learning engine, an inference pass over the predictive model to generate an output representing a particular context that is specific to the particular user;
determining, based on the particular context for the particular user, that one or more components of an ambient computing system should be disabled, and
in response to said determining that one or more components of the ambient computing system should be disabled, disabling the one or more components of the ambient computing system **characterised in that** disabling the one or more components of the ambient computing system comprises disabling one or more of the sensors, disabling a transcription module that automatically transcribes human speech, and/or disabling an I/O channel between the sensors and other components of the ambient computing system.

10. The method of claim 9, wherein disabling one or more of the sensors comprises cutting power to the one or more sensors.

11. The method of claim 9 or 10, wherein disabling one or more of the sensors comprises disabling a microphone, a camera, a vision sensor, a radar sensor, or a location sensor.

12. The method of any one of claims 9 to 11, wherein determining, based on the particular context for the particular user, that one or more of the sensors should be disabled comprises determining that audio signals received by one or more microphones include speech uttered by a particular person previously identified by the user.

13. The method of claim any one of claims 9 to 12, further comprising blocking transmission of data during the inference pass from being written to a main memory, a main CPU cluster, or a main machine learning engine.

14. One or more non-transitory computer-readable media storing instructions that, when executed by one or more computers, cause the one or more computers to perform operations comprising:
remaining in a monitoring power state until a controller receives an interrupt indicating presence of one or more sensor signals generated by one or more sensors;
providing the one or more sensor signals as input to a machine learning engine, wherein the machine learning engine implements a predictive model trained on user-specific data that is specific to a particular user;
performing, by the machine learning engine, an inference pass over the predictive model to generate an output representing a particular context that is specific to the particular user;
determining, based on the particular context for the particular user, that one or more components of an ambient computing system should be disabled, and
in response to said determining that one or more components of the ambient computing system should be disabled, disabling the one or more components of the ambient computing system, **characterised in that** disabling the one or more components of the ambient computing system comprises disabling one or more of the sensors, disabling a transcription module that automatically transcribes human speech, and/or disabling an I/O channel between the sensors and other components of the ambient computing system.

## Patentansprüche

1. Ambient-Computing-System, das Folgendes umfasst:
einen oder mehrere Sensoren, die so konfiguriert sind, dass sie Sensorsignale erzeugen; und
eine Vielzahl von Verarbeitungskomponenten, einschließlich eines Engines für maschinelles Lernen und einer oder mehrerer anderer Verarbeitungskomponenten,
wobei das Ambient-Computing-System so konfiguriert ist, dass es Vorgänge durchführt, die Folgendes umfassen:
Verbleiben in einem Überwachungsenergiezustand, bis ein Controller ein Interrupt empfängt, das das Vorhandensein von einem oder mehreren Sensorsignalen angibt,
Bereitstellen des einen oder der mehreren Sensorsignale als Eingabe für das Engine für maschinelles Lernen, wobei das Engine für maschinelles Lernen ein Vorhersagemodell implementiert, das auf benutzerspezifischen Daten trainiert wurde, die spezifisch für einen bestimmten Benutzer sind,
Ausführen eines Inferenzdurchlaufs durch das Engine für maschinelles Lernen über das Vorhersagemodell, um eine Ausgabe zu erzeugen, die einen bestimmten Kontext repräsentiert, der für den bestimmten Benutzer spezifisch ist,
Bestimmen, basierend auf dem besonderen Kontext für den bestimmten Benutzer, dass eine oder mehrere Komponenten des Ambient-Computing-Systems deaktiviert werden sollen, und
als Reaktion auf das Bestimmen, dass eine oder mehrere Komponenten des Ambient-Computing-Systems deaktiviert werden sollen,
Deaktivieren der einen oder mehreren Komponenten des Ambient-Computing-Systems, **dadurch gekennzeichnet, dass** das Deaktivieren der einen oder mehreren Komponenten des Ambient-Computing-Systems das Deaktivieren eines oder mehrerer der Sensoren, das Deaktivieren eines Transkriptionsmoduls, das automatisch menschliche Sprache transkribiert, und/oder
Deaktivieren eines I/O-Kanals zwischen den Sensoren und anderen Komponenten des Ambient-Computing-Systems umfasst.

2. System nach Anspruch 1, wobei das Deaktivieren eines oder mehrerer der Sensoren das Unterbrechen der Stromversorgung des einen oder der mehreren Sensoren umfasst.

3. System nach Anspruch 1 oder 2, wobei das Deaktivieren eines oder mehrerer der Sensoren das Deaktivieren eines Mikrofons, einer Kamera, eines Vision-Sensors, eines Radarsensors oder eines Ortungssensors umfasst.

4. System nach einem der vorhergehenden Ansprüche, wobei das Bestimmen, auf der Grundlage des speziellen Kontexts für den bestimmten Benutzer, dass einer oder mehrere der Sensoren deaktiviert werden sollen, das Bestimmen umfasst, dass Audiosignale, die von einem oder mehreren Mikrofonen empfangen werden, Sprache einschließen, die von einer bestimmten, zuvor vom Benutzer identifizierten Person geäußert wurde.

5. System nach einem der vorhergehenden Ansprüche, wobei das Ambient-Computing-System konfiguriert ist, um die Übertragung von Daten während des Inferenzdurchlaufs zu blockieren, damit diese nicht in einen Hauptspeicher, in einen Haupt-CPU-Cluster oder in ein Haupt-Engine für maschinelles Lernen geschrieben werden.

6. System nach einem der vorhergehenden Ansprüche, wobei das Ambient-Computing-System konfiguriert ist, um einen Trainingsprozess durchzuführen, um das Vorhersagemodell mit benutzerspezifischen Daten zu aktualisieren, wobei das Durchführen des Trainingsprozesses das Durchführen von Vorgänge umfasst, die Folgendes umfassen:
Empfangen einer Benutzereingabe, die angibt, dass ein aktueller Umgebungskontext ein Kontext ist, in dem eine oder mehrere Komponenten des Ambient-Computing-Systems deaktiviert werden sollen;
Erzeugen von Trainingsdaten aus aufgezeichneten Eingaben des einen oder der mehreren Sensoren; und
Aktualisieren des Vorhersagemodells unter Verwendung der Trainingsdaten, die aus den aufgezeichneten Eingaben des einen oder der mehreren Sensoren erzeugt wurden.

7. System nach Anspruch 6, wobei das Empfangen der Benutzereingabe das Empfangen einer Benutzereingabe umfasst, die einen bestimmten Benutzer identifiziert, der während eines jüngeren Zeitraums Sprache geäußert hat.

8. System nach Anspruch 6 oder 7, wobei der aktuelle Umgebungskontext Daten umfasst, die eine Darstellung des aktuellen Standorts des Benutzers einschließen.

9. Computerimplementiertes Verfahren, Folgendes umfassend:
Verbleiben in einem Überwachungsenergiezustand, bis ein Controller einen Interrupt empfängt, das das Vorhandensein eines oder mehrerer Sensorsignale angibt, die von einem oder mehreren Sensoren erzeugt wurden;
Bereitstellen des einen oder der mehreren Sensorsignale als Eingabe an ein Engine für maschinelles Lernen, wobei das Engine für maschinelles Lernen ein Vorhersagemodell implementiert, das auf benutzerspezifischen Daten trainiert wurde, die für einen bestimmten Benutzer spezifisch sind;
Durchführen eines Inferenzdurchlaufs über das Vorhersagemodell durch das maschinelle Lernsystem, um eine Ausgabe zu erzeugen, die einen bestimmten Kontext repräsentiert, der für den bestimmten Benutzer spezifisch ist;
Bestimmen, basierend auf dem speziellen Kontext für den bestimmten Benutzer, dass eine oder mehrere Komponenten eines Ambient-Computing-Systems deaktiviert werden sollen, und
als Reaktion auf das Bestimmen, dass eine oder mehrere Komponenten des Ambient-Computing-Systems deaktiviert werden sollen,
Deaktivieren der einen oder mehreren Komponenten des Ambient-Computing-Systems, **dadurch gekennzeichnet, dass** das Deaktivieren der einen oder mehreren Komponenten des Ambient-Computing-Systems das Deaktivieren eines oder mehrerer der Sensoren, das Deaktivieren eines Transkriptionsmoduls, das die menschliche Sprache automatisch transkribiert, und/oder das Deaktivieren eines I/O-Kanals zwischen den Sensoren und anderen Komponenten des Ambient-Computing-Systems umfasst.

10. Verfahren nach Anspruch 9, wobei das Deaktivieren eines oder mehrerer der Sensoren das Unterbrechen der Stromversorgung des einen oder der mehreren Sensoren umfasst.

11. Verfahren nach Anspruch 9 oder 10, wobei das Deaktivieren eines oder mehrerer der Sensoren das Deaktivieren eines Mikrofons, einer Kamera, eines Vision-Sensors, eines Radarsensors oder eines Ortungssensors umfasst.

12. Verfahren nach einem der Ansprüche 9 bis 11, wobei die Bestimmung, basierend auf dem bestimmten Kontext für den bestimmten Benutzer, dass einer oder mehrere der Sensoren deaktiviert werden sollen, das Bestimmen umfasst, dass die von einem oder mehreren Mikrofonen empfangenen Audiosignale Sprache einschließen, die von einer bestimmten, zuvor vom Benutzer identifizierten Person gesprochen wurde.

13. Verfahren nach einem der Ansprüche 9 bis 12, ferner umfassend das Blockieren der Übertragung von Daten während des Inferenzdurchlaufs damit diese nicht in einen Hauptspeicher, einen Haupt-CPU-Cluster oder ein Haupt-Engine für maschinelles Lernen geschrieben werden.

14. Ein oder mehrere nichtflüchtige computerlesbare Medien, die Anweisungen speichern, die, wenn sie von einem oder mehreren Computern ausgeführt werden, den einen oder die mehreren Computer veranlassen, Vorgänge durchzuführen, die Folgendes umfassen:
Verbleiben in einem Überwachungszustand, bis ein Controller ein Interrupt empfängt, das das Vorhandensein eines oder mehrerer Sensorsignale angibt, die von einem oder mehreren Sensoren erzeugt wurden;
Bereitstellen des einen oder der mehreren Sensorsignale als Eingabe an ein Engine für maschinelles Lernen, wobei das Engine für maschinelles Lernen ein Vorhersagemodell implementiert, das auf benutzerspezifischen Daten trainiert wurde, die für einen bestimmten Benutzer spezifisch sind;
Ausführen eines Inferenzdurchlaufs über das Vorhersagemodell durch das Engine für maschinelles Lernen, um eine Ausgabe zu erzeugen, die einen bestimmten Kontext repräsentiert, der für den bestimmten Benutzer spezifisch ist;
Bestimmen, basierend auf dem bestimmten Kontext für den bestimmten Benutzer, dass eine oder mehrere Komponenten eines Ambient-Computing-Systems deaktiviert werden sollen, und
als Reaktion auf die Bestimmung, dass eine oder mehrere Komponenten des Ambient-Computing-Systems deaktiviert werden sollen,
Deaktivieren der einen oder mehreren Komponenten des Ambient-Computing-Systems, **dadurch gekennzeichnet, dass** das Deaktivieren der einen oder mehreren Komponenten des Ambient-Computing-Systems das Deaktivieren eines oder mehrerer der Sensoren, das Deaktivieren eines Transkriptionsmoduls, das automatisch menschliche Sprache transkribiert, und/oder das Deaktivieren eines I/O-Kanals zwischen den Sensoren und anderen Komponenten des Ambient-Computing-Systems umfasst.

## Revendications

1. Système informatique ambiant comprenant :
un ou plusieurs capteurs configurés pour générer des signaux de capteur ; et
une pluralité de composants de traitement incluant un moteur d'apprentissage automatique, et un ou plusieurs autres composants de traitement,
dans lequel le système informatique ambiant est configuré pour effectuer des opérations comprenant :
rester dans un état d'alimentation de surveillance jusqu'à ce qu'un contrôleur reçoive une interruption indiquant la présence d'un ou de plusieurs signaux de capteur,
fournir les un ou plusieurs signaux de capteur en tant qu'entrée au moteur d'apprentissage automatique, dans lequel le moteur d'apprentissage automatique met en oeuvre un modèle prédictif formé sur des données spécifiques à l'utilisateur qui sont spécifiques à un utilisateur particulier,
exécuter, par le moteur d'apprentissage automatique, une passe d'inférence sur le modèle prédictif pour générer une sortie représentant un contexte particulier propre à l'utilisateur particulier,
déterminer, sur la base du contexte particulier de l'utilisateur particulier, qu'un ou plusieurs composants du système informatique ambiant doivent être désactivés, et
en réponse à la détermination qu'un ou plusieurs composants du système informatique ambiant devraient être désactivés,
désactiver les un ou plusieurs composants du système informatique ambiant, **caractérisé en ce que** la désactivation des un ou plusieurs composants du système informatique ambiant comprend la désactivation d'un ou de plusieurs des capteurs, la désactivation d'un module de transcription qui transcrit automatiquement la parole humaine et/ou
désactiver un canal d'E/S entre les capteurs et d'autres composants du système informatique ambiant.

2. Système selon la revendication 1, dans lequel la désactivation d'un ou de plusieurs des capteurs comprend le fait de couper l'alimentation des un ou plusieurs capteurs.

3. Système selon la revendication 1 ou 2, dans lequel la désactivation d'un ou de plusieurs des capteurs comprend la désactivation d'un microphone, d'une caméra, d'un capteur de vision, d'un capteur radar ou d'un capteur de localisation.

4. Système selon l'une quelconque des revendications précédentes, dans lequel la détermination, sur la base du contexte particulier de l'utilisateur particulier, qu'un ou plusieurs des capteurs devraient être désactivés comprend la détermination que des signaux audio reçus par un ou plusieurs microphones incluent des paroles prononcées par une personne particulière précédemment identifiée par l'utilisateur.

5. Système selon l'une quelconque des revendications précédentes, dans lequel le système informatique ambiant est configuré pour bloquer la transmission de données pendant la passe d'inférence, pour qu'elles ne soient pas écrites dans la mémoire principale, dans une grappe d'unités centrales principale ou dans un moteur d'apprentissage automatique principal.

6. Système selon l'une quelconque des revendications précédentes, dans lequel le système informatique ambiant est configuré pour effectuer un processus d'entraînement pour mettre à jour le modèle prédictif avec des données spécifiques à l'utilisateur, dans lequel l'exécution du processus d'entraînement comprend l'exécution d'opérations comprenant :
recevoir une entrée utilisateur indiquant qu'un contexte environnemental actuel est un contexte dans lequel un ou plusieurs composants du système informatique ambiant doivent être désactivés ;
générer des données d'entraînement à partir des entrées enregistrées par les un ou plusieurs capteurs ; et
mettre à jour le modèle prédictif en utilisant les données d'entraînement générées à partir des entrées enregistrées des un ou plusieurs capteurs.

7. Système selon la revendication 6, dans lequel la réception de l'entrée utilisateur comprend la réception d'une entrée utilisateur identifiant un utilisateur particulier qui a prononcé des paroles au cours d'une période récente.

8. Système selon la revendication 6 ou 7, dans lequel le contexte environnemental actuel comprend des données incluant une représentation de l'emplacement actuel de l'utilisateur.

9. Procédé mis en oeuvre par ordinateur comprenant :
rester dans un état d'alimentation de surveillance jusqu'à ce qu'un contrôleur reçoive une interruption indiquant la présence d'un ou de plusieurs signaux de capteur générés par un ou plusieurs capteurs ;
fournir les un ou plusieurs signaux de capteur en tant qu'entrée à un moteur d'apprentissage automatique, dans lequel le moteur d'apprentissage automatique met en oeuvre un modèle prédictif formé sur des données spécifiques à l'utilisateur qui sont spécifiques à un utilisateur particulier ;
exécuter, par le moteur d'apprentissage automatique, une passe d'inférence sur le modèle prédictif pour générer une sortie représentant un contexte particulier propre à l'utilisateur particulier ;
déterminer, sur la base du contexte particulier de l'utilisateur particulier, qu'un ou plusieurs composants d'un système informatique ambiant doivent être désactivés, et
en réponse à la détermination qu'un ou plusieurs composants du système informatique ambiant devraient être désactivés,
désactiver les un ou plusieurs composants du système informatique ambiant, **caractérisé en ce que** la désactivation des un ou plusieurs composants du système informatique ambiant comprend la désactivation d'un ou de plusieurs des capteurs, la désactivation d'un module de transcription qui transcrit automatiquement la parole humaine, et/ou la désactivation d'un canal d'E/S entre les capteurs et d'autres composants du système informatique ambiant.

10. Procédé selon la revendication 9, dans lequel la désactivation d'un ou de plusieurs des capteurs comprend le fait de couper l'alimentation des un ou plusieurs capteurs.

11. Procédé selon la revendication 9 ou 10, dans lequel la désactivation d'un ou de plusieurs des capteurs comprend la désactivation d'un microphone, d'une caméra, d'un capteur de vision, d'un capteur radar ou d'un capteur de localisation.

12. Procédé selon l'une quelconque des revendications 9 à 11, dans lequel la détermination, sur la base du contexte particulier de l'utilisateur particulier, qu'un ou plusieurs des capteurs devraient être désactivés comprend la détermination que les signaux audio reçus par un ou plusieurs microphones incluent des paroles prononcées par une personne particulière précédemment identifiée par l'utilisateur.

13. Procédé selon l'une quelconque des revendications 9 à 12, comprenant en outre le blocage de la transmission de données pendant la passe d'inférence pour qu'elles ne soient pas écrites dans une mémoire principale, une grappe d'unités centrales principale ou un moteur d'apprentissage automatique principal.

14. Un ou plusieurs supports non transitoires lisibles par ordinateur stockant des instructions qui, lorsqu'elles sont exécutées par un ou plusieurs ordinateurs, amènent les un ou plusieurs ordinateurs à effectuer des opérations comprenant :
rester dans un état d'alimentation de surveillance jusqu'à ce qu'un contrôleur reçoive une interruption indiquant la présence d'un ou de plusieurs signaux de capteur générés par un ou plusieurs capteurs ;
fournir les un ou plusieurs signaux de capteur en tant qu'entrée à un moteur d'apprentissage automatique, dans lequel le moteur d'apprentissage automatique met en oeuvre un modèle prédictif formé sur des données spécifiques à l'utilisateur qui sont spécifiques à un utilisateur particulier ;
exécuter, par le moteur d'apprentissage automatique, une passe d'inférence sur le modèle prédictif pour générer une sortie représentant un contexte particulier propre à l'utilisateur particulier ;
déterminer, sur la base du contexte particulier de l'utilisateur particulier, qu'un ou plusieurs composants d'un système informatique ambiant doivent être désactivés, et
en réponse à la détermination qu'un ou plusieurs composants du système informatique ambiant devraient être désactivés,
désactiver les un ou plusieurs composants du système informatique ambiant, **caractérisé en ce que** la désactivation des un ou plusieurs composants du système informatique ambiant comprend la désactivation d'un ou de plusieurs des capteurs, la désactivation d'un module de transcription qui transcrit automatiquement la parole humaine, et/ou la désactivation d'un canal d'E/S entre les capteurs et d'autres composants du système informatique ambiant.
